Europäisches Patentamt

European Patent Office

Office européen des brevets

(11) Numéro de publication: **0 612 188 A1**

## (12) DEMANDE DE BREVET EUROPEEN

(21) Numéro de dépôt: **94200324.5**

(22) Date de dépôt: **10.02.94**

(30) Priorité: **17.02.93 FR 9301803**

(43) Date de publication de la demande:
**24.08.94 Bulletin 94/34**

(84) Etats contractants désignés:
**DE FR GB**

(51) Int. Cl.⁵: **H04N 7/10, H04B 3/36**

(71) Demandeur: **PHILIPS ELECTRONIOUE GRAND PUBLIC**
**51, Rue Carnot**
**F-92150 Suresnes (FR)**
㊻ **FR**

(71) Demandeur: **N.V. Philips' Gloeilampenfabrieken**
**Groenewoudseweg 1**
**NL-5621 BA Eindhoven (NL)**
㊻ **DE GB**

(72) Inventeur: **Fasquel, Jean-Marc**
**Société Civile S.P.I.D.,**
**156, Boulevard Haussmann**
**F-75008 Paris (FR)**

(74) Mandataire: **Caron, Jean et al**
**Société Civile S.P.I.D.**
**156, Boulevard Haussmann**
**F-75008 Paris (FR)**

(54) **Dispositif pour la transmission de signaux de télévision.**

㊸ Le dispositif comporte, entre une borne d'entrée et une borne de sortie, une première et une seconde branches, en parallèle entre elles, munies chacune d'un amplificateur (A1, A2), avec un filtre passe-haut (C1, L1) dans la première branche, et un filtre passe-bas (L2, C2) dans la seconde branche, afin de sélectionner une gamme de fréquences différente pour chacun des deux amplificateurs. Selon l'invention, le filtre passe-haut (C1, L1) et le filtre passe-bas (L2, C2) ont pratiquement la même fréquence de coupure et un degré modéré, et les amplificateurs (A1, A2) sont du même modèle.

Applications : télévision : réseaux câblés.

FIG.1

Rank Xerox (UK) Business Services
(3. 10/3.0 9/3.3.4)

La présente invention concerne un dispositif pour la transmission et l'amplification de signaux de télévision comportant une borne d'entrée et une borne de sortie susceptibles d'être reliées chacune à un câble de distribution d'impédance caractéristique Ro, avec entre ces deux bornes une première et une seconde branches, en parallèle entre elles, munies chacune d'un amplificateur, avec un filtre passe-haut entre la borne d'entrée et l'amplificateur de la première branche, et un filtre passe-bas entre la borne d'entrée et l'amplificateur de la seconde branche, afin de sélectionner une gamme de fréquences différente pour chacun des deux amplificateurs.

Un tel dispositif est employé notamment dans des installations de distribution de télévision par câble connues sous le nom de "MATV" ou "CATV".

Un dispositif correspondant au préambule ci-dessus est connu du document FR 1.106.667. Dans ce dispositif, les filtres sont conçus pour procurer deux bandes de fréquences distinctes de respectivement 60 kHz-4,1 MHz et 5MHz-13 MHz. Une disposition semblable est utilisée en télévision sous le nom de "split-band", pour amplifier séparément la bande dite VHF (47-420 MHz) et la bande dite UHF (470-860 MHz). Il est clair que pour séparer correctement des fréquences aussi voisines que 420 MHz (limite haute de la bande VHF) et 470 MHz (limite basse de la bande UHF), il faut des pentes d'atténuation fortes et des filtres de degré élevé. De tels filtres sont coûteux et en outre ils introduisent des rotations de phase importantes qui peuvent être gênantes. Il y a une solution de continuité entre les bandes de fréquences de chacune des branches.

Pour obtenir une bande passante continue, il est bien entendu possible d'utiliser un seul amplificateur couvrant la bande 47-860 MHz à lui seul. Toutefois on obtient de meilleures performances en gain et en distorsion si l'on sépare la bande passante en deux parties, du fait que l'obtention de bonnes performances est d'autant plus facile que la bande passante est étroite.

On désire obtenir un dispositif qui procure une bande passante continue tout en ayant de meilleures performances que celles d'un amplificateur large bande. A cet effet, on peut imaginer de prendre un dispositif connu à deux branches et de rapprocher ou même de faire coïncider les fréquences de coupure des deux filtres pour diminuer ou supprimer la discontinuité entre les deux parties de bande passante. Il se produit alors, à cause des déphasages dans les filtres, des irrégularités gênantes aussi bien dans l'amplitude que dans la phase au voisinage des fréquences de coupure.

L'invention fournit un dispositif à deux amplificateurs s'occupant chacun d'une bande de fréquences différente de celle de l'autre, et qui pour autant ne présente pas d'irrégularités ou de rotations de phase gênantes au voisinage des fréquences de coupure.

Selon l'invention, le filtre passe-haut comportant à l'entrée une capacité d'entrée de valeur C disposée en série dans la première branche et le filtre passe-bas comportant à l'entrée une inductance d'entrée de valeur L disposée en série dans la seconde branche, les deux filtres ont la même fréquence de coupure nominale, et le rapport L/C présente la valeur nominale $2 R_o^2$.

Ainsi l'invention est basée sur l'idée d'utiliser deux filtres en quelque sorte complémentaires l'un de l'autre, et sur la reconnaissance du fait qu'une relation particulière entre les impédances des composants d'entrée de ces filtres suffit pour éviter les irrégularités gênantes.

On constate en outre qu'un tel dispositif fonctionne bien même avec des pentes d'atténuation modérées, ce qui permet la réalisation de filtres plus économiques. Chacun des deux filtres étant par exemple de degré deux, le filtre passe-bas comporte en aval de l'inductance d'entrée une capacité en shunt, qui est avantageusement de valeur égale à celle de la capacité d'entrée du filtre passe-haut, et le filtre passe-haut comporte en aval de la capacité d'entrée une inductance en shunt, qui est avantageusement de valeur égale à celle de l'inductance d'entrée du filtre passe-bas.

Le dispositif peut en outre être avantageusement muni d'un filtre passe-haut entre l'amplificateur de la première branche et la borne de sortie, et d'un filtre passe-bas entre l'amplificateur de la seconde branche et la borne de sortie, chacun de ces filtres étant respectivement semblable à celui placé à l'entrée de la branche.

Un avantage de l'invention est qu'il n'est pas nécessaire de prévoir des amplificateurs spécialisés pour chaque gamme de fréquences. Ainsi une configuration telle que définie ci-dessus, employant deux amplificateurs large bande identiques, est avantageuse.

Si par contre les amplificateurs sont différents l'un de l'autre, il est avantageux que l'une des branches soit munie d'un circuit de retard, de façon à compenser les différences de temps de transit entre les deux branches aux alentours de la fréquence de coupure des filtres.

Ces aspects de l'invention ainsi que d'autres aspects plus détaillés apparaîtront plus clairement grâce à la description suivante d'un mode de réalisation non limitatif.

La figure 1 est un schéma électrique d'un dispositif selon l'invention.

La figure 2 est un schéma électrique d'un circuit de retard.

La figure 3 est un schéma électrique d'un assemblage de deux dispositifs.

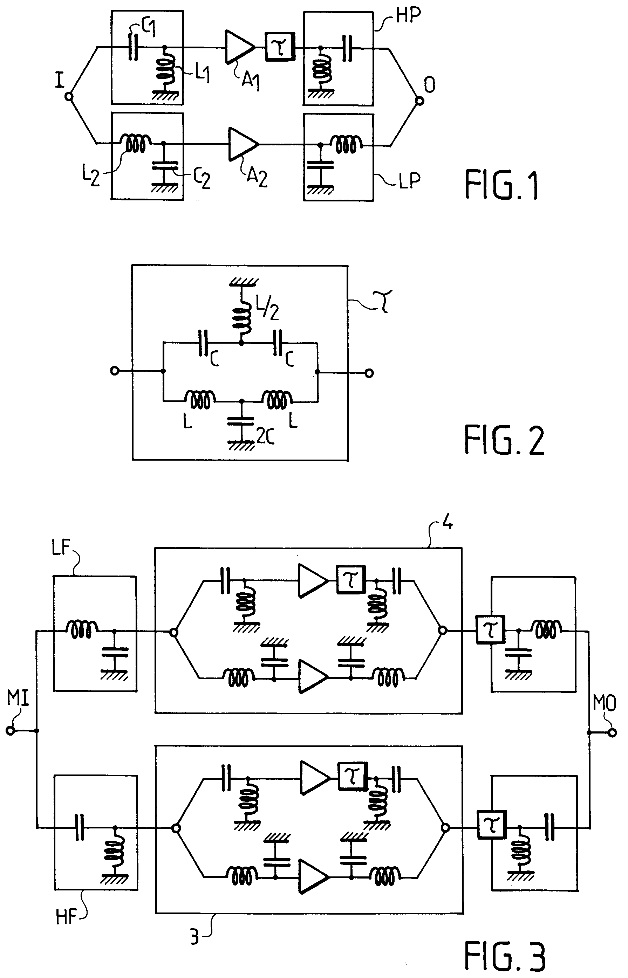

Le dispositif dont le schéma est représenté sur la figure 1 comprend une structure de base, dite à filtres complémentaires, comportant, entre une borne d'entrée I et une borne de sortie 0, une première branche et une seconde branche en parallèle entre elles, munies chacune d'un amplificateur, respectivement A1 et A2. Un filtre passe-haut de degré deux constitué d'une capacité C1 en série dans la branche, suivie d'une inductance L1 en shunt vers la masse est inséré entre la borne d'entrée I et l'amplificateur A1 de la première branche. Un filtre passe-bas de degré deux constitué d'une inductance L2 en série dans la branche, suivie d'une capacité C2 en shunt vers la masse est inséré entre la borne d'entrée I et l'amplificateur A2 de la seconde branche. Ces filtres ont pour but de sélectionner une gamme de fréquences différente pour chacun des deux amplificateurs.

Le filtre passe-haut C1, L1 et le filtre passe-bas L2, C2 ont pratiquement la même fréquence de coupure qui est de 450 Mhz pour 3 dB d'atténuation. On choisit $L2/C1 = 2 R_o^2$ ($R_o$ est l'impédance caractéristique des lignes et des entrées/sorties), et en outre les valeurs de C1 et C2 sont égales, ainsi que celles de L1 et L2.

Il est possible de prévoir des filtres de degrés plus élevés, bien que l'avantage n'en soit pas évident. Dans ce cas, le rapport $L2/C1 = 2 R_o^2$ doit toujours être conservé, mais les valeurs des éléments shunt sont différentes du fait qu'ils sont suivis d'autres éléments. Par exemple dans le cas où la cellule L1,C1 serait suivie d'une deuxième cellule L'1,C'1 (non représentée) ayant la même constitution que L1,C1 et où la cellule L2,C2 serait suivie d'une deuxième cellule L'2,C'2 (non représentée) ayant la même constitution que L2,C2 on devrait choisir, à partir des valeurs de L2 et C1 inchangées :

$$L1 = L2 * (\sqrt{2-1}),$$
$$C'1 = C1 * \sqrt{2},$$
$$L'1 = L2 * (1 + 1/\sqrt{2}),$$
$$C2 = C1 /(\sqrt{2-1}),$$
$$L'2 = L2 / \sqrt{2},$$
$$C'2 = C1 / (1 + 1/\sqrt{2}).$$

Le dispositif est muni en outre d'un filtre passe-haut HP entre l'amplificateur A1 de la première branche et la borne de sortie 0, et d'un filtre passe-bas LP entre l'amplificateur A2 de la seconde branche et la borne de sortie 0, chacun de ces filtres étant respectivement symétrique de celui placé à l'entrée de la branche. Pour la fréquence de coupure à trois décibels avec des filtres de degré deux, le signal dans la première branche est en avance de $\pi$ à la sortie du filtre d'entrée, et prend une avance supplémentaire de $\pi$ dans le filtre de sortie, ainsi il est en avance de $2\pi$, indépendamment de l'écart de phase acquis dans l'amplificateur. De son côté, pour cette même fréquence de coupure à trois décibels, le signal dans la seconde branche est en retard de $\pi$ à la sortie du filtre d'entrée, et prend un retard supplémentaire de $\pi$ dans le filtre de sortie, ainsi il est en retard de $2\pi$, indépendamment de l'écart de phase acquis dans l'amplificateur. Si les amplificateurs sont identiques entre eux, les signaux des deux branches sont donc finalement en phase sur la borne de sortie 0. On peut remarquer que si l'on supprimait les amplificateurs, on obtiendrait une structure passe-tout, avec un temps de propagation de groupe constant, sans réglage.

Néanmoins les amplificateurs peuvent très bien ne pas être identiques, mais dans ce cas, comme les deux branches doivent rester en phase dans la partie de bande passante commune, afin qu'il ne se produise pas d'interférences fâcheuses, il faut munir l'une des branches d'un circuit de retard $\tau$. Un tel circuit de retard $\tau$, représenté plus en détail sur la figure 2, est par exemple fait d'un filtre passe-tout sans amplificateur.

Les amplificateurs sont par exemple des modèles cascode réalisés en circuits intégrés hybrides. Certains d'entre eux ont des performances meilleures en VHF qu'en UHF, ce qui est avantageux ici car la structure passe-tout améliore surtout les performances en UHF : ainsi l'emploi de deux amplificateurs de ce type rétablit l'équilibre entre UHF et VHF.

En utilisant des modules amplificateurs de type BGY885A, commercialisés par la Demanderesse, et des filtres constitués chacun d'une inductance de 38 nH et d'une capacité de 3,3 pF, l'invention fait gagner environ 8 décibels du point de vue de la distorsion composite de second ordre ("CSO") et autant du point de vue des battements composites d'ordre trois ("CTB"), par rapport à une structure à un seul module.

On peut encore imaginer de diviser la bande de fréquences en quatre ou huit ou jusqu'à $2^n$ parties. En pratique, les différents filtres ayant des fréquences de transition différentes, il est alors nécessaire de rajouter des retards $\tau$ différents, ce qui augmente la complexité et introduit des réglages. Un tel assemblage avec la bande de fréquences divisée en quatre est représenté par la figure 3. Il est constitué de deux dispositifs 3 et 4 disposés en parallèle entre une borne d'entrée générale MI et une borne de sortie générale MO, avec un filtre passe-haut HF entre la borne d'entrée générale et la borne d'entrée du premier dispositif 3, et un filtre passe-bas LF entre la borne d'entrée générale et la borne d'entrée du second dispositif 4, chacun des dispositifs 3 et 4 ayant une fréquence de coupure différente. Les filtres HF et LF ont par exemple une fréquence de coupure commune de 450 MHz, le dispositif 3 a une fréquence de coupure de 650 MHz et le dispositif 4 a une fréquence de coupure de 250 MHz. Des éléments de retard $\tau$, évidemment différents l'un de l'autre, sont prévus à l'entrée ou à la sortie (cas représenté) de chacun des dispositifs 3 et 4. Le bénéfice procuré par cet assemblage est toutefois relativement faible par rapport à une structure simple à deux amplificateurs et le prix est plus que doublé.

**Revendications**

1. Dispositif pour la transmission et l'amplification de signaux de télévision comportant une borne d'entrée et une borne de sortie susceptibles d'être reliées chacune à un câble de distribution d'impédance caractéristique Ro, avec entre ces deux bornes une première et une seconde branches, en parallèle entre elles, munies chacune d'un amplificateur, avec un filtre passe-haut entre la borne d'entrée et l'amplificateur de la première branche, et un filtre passe-bas entre la borne d'entrée et l'amplificateur de la seconde branche, afin de sélectionner une gamme de fréquences différente pour chacun des deux amplificateurs, caractérisé en ce que, le filtre passe-haut comportant à l'entrée une capacité d'entrée de valeur C disposée en série dans la première branche et le filtre passe-bas comportant à l'entrée une inductance d'entrée de valeur L disposée en série dans la seconde branche, les deux filtres ont la même fréquence de coupure nominale, et le rapport L/C présente la valeur nominale 2 $R_o^2$.

2. Dispositif selon la revendication 1, caractérisé en ce que chacun des deux filtres est de degré deux, le filtre passe-bas comporte en aval de l'inductance d'entrée une capacité en shunt de valeur égale à celle de la capacité d'entrée du filtre passe-haut, et le filtre passe-haut comporte en aval de la capacité d'entrée une inductance en shunt de valeur égale à celle de l'inductance d'entrée du filtre passe-bas.

3. Dispositif selon l'une des revendications 1 ou 2, caractérisé en ce qu'il est muni en outre d'un filtre passe-haut entre l'amplificateur de la première branche et la borne de sortie, et d'un filtre passe-bas entre l'amplificateur de la seconde branche et la borne de sortie, chacun de ces filtres étant respectivement semblable à celui placé à l'entrée de la branche.

4. Dispositif selon l'une quelconque des revendications 1 à 3, caractérisé en ce que l'une des branches est munie d'un circuit de retard.

5. Dispositif selon l'une quelconque des revendications 1 à 3, caractérisé en ce que les deux amplificateurs sont identiques.

6. Dispositif selon l'une quelconque des revendications précédentes, caractérisé en ce que, les deux amplificateurs étant réalisés en technologie dite circuits intégrés hybrides", ils sont intégrés sur un même substrat.

7. Dispositif selon la revendication précédente, caractérisé en ce que les filtres sont intégrés avec les deux amplificateurs sur le même substrat.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,A | FR-A-1 106 667 (COMPAGNIE INDUSTRIELLE DES TÉLÉPHONES) <br> * page 3, colonne 2, ligne 26 - ligne 58; figure 5 * | 1,3,5 | H04N7/10 <br> H04B3/36 |
| A | IEEE TRANSACTIONS ON CABLE TELEVISION <br> vol. CATV-5, no. 2 , Avril 1980 <br> pages 72 - 79 <br> A. PROCHAZKA ET A. 'Design of a Wideband Feedforward Distribution Amplifier.' <br> * page 72, colonne 1, ligne 36 - colonne 2, ligne 13; figure 1 * | 1,4-6 | |
| A | HASLER MITTEILLUNGEN <br> vol. 40, no. 2 , Juin 1981 , BERN CH <br> pages 51 - 57 <br> H. U. ROHRBACH 'Mehrfachausnützung eines Koaxialkabels durch Übertragung von Zwischenfrequenzsignalen.' <br> * page 51, colonne 1, ligne 1 - page 52, colonne 1, ligne 43 * <br> * page 53, colonne 1, ligne 19 - colonne 2, ligne 22; figures 1,2 * | 1,3 | |
| A | PATENT ABSTRACTS OF JAPAN <br> vol. 014, no. 178 (E-0915)10 Avril 1990 <br> & JP-A-02 031 531 (FUJITSU GENERAL LTD) 1 Février 1990 <br> * abrégé * | 1 | |
| A | PATENT ABSTRACTS OF JAPAN <br> vol. 16, no. 233 (E-1209)28 Mai 1992 <br> & JP-A-04 045 622 (NEC CORPORATION) 14 Février 1992 <br> * abrégé * | 1 | |

DOMAINES TECHNIQUES RECHERCHES (Int.Cl.5)

H04N
H04B

Le présent rapport a été établi pour toutes les revendications

| Lieu de la recherche | Date d'achèvement de la recherche | Examinateur |
|---|---|---|
| LA HAYE | 1 Juin 1994 | Verleye, J |

EPO FORM 1503 03.82 (P04C02)